Europäisches Patentamt

European Patent Office

Office européen des brevets

(11) Veröffentlichungsnummer: **0 518 154 A2**

# EUROPÄISCHE PATENTANMELDUNG

(21) Anmeldenummer: **92109194.8**

(22) Anmeldetag: **01.06.92**

(51) Int. Cl.5: **C08G 18/34**, C08G 18/42,
C08G 18/64, C09D 175/06

(30) Priorität: **13.06.91 DE 4119444**

(43) Veröffentlichungstag der Anmeldung:
**16.12.92 Patentblatt 92/51**

(84) Benannte Vertragsstaaten:
**AT BE CH DE DK ES FR GB GR IT LI NL SE**

(71) Anmelder: **Wolff Walsrode Aktiengesellschaft
Postfach
W-3030 Walsrode 1(DE)**

(72) Erfinder: **Lühmann, Erhard
Kastanienweg 2
W-3036 Bomlitz(DE)**
Erfinder: **Kressdorf, Burkhard, Dr.
Ellinghäuser Strasse 15
W-3030 Walsrode(DE)**
Erfinder: **Hoppe, Lutz, Dr.
Am Badeteich 8
W-3030 Walsrode(DE)**
Erfinder: **Szablikowsi, Klaus, Dr.
Claudiusstrasse 5
W-3030 Walsrode(DE)**
Erfinder: **Weber, Gunter, Dr.
Am Rötelbach 16
W-3032 Fallingbostel(DE)**
Erfinder: **Meyer-Stork, Sebastian, Dr.
Dr. -Schomerus-Strasse 4
W- 3030 Walsrode(DE)**

(74) Vertreter: **Braun, Rolf, Dr.
c/o Bayer AG Konzernverwaltung RP Patente
Konzern
W-5090 Leverkusen 1 Bayerwerk(DE)**

(54) **Beschichtungssystem für wasserquellbare Materialien.**

(57) Die vorliegende Erfindung betrifft ein Beschichtungsmittel für Filme, Formkörper oder Folien aus modifizierten oder unmodifizierten Polysacchariden.

Die vorliegende Erfindung betrifft ein Beschichtungsmittel für Filme, Formkörper oder Folien aus modifizierten oder unmodifizierten Polysachariden.

Verfahren zur Herstellung Von Regeneratcellulose in Faser- bzw. Folienform sind seit langem bekannt. Ebenfalls seit langem ist bekannt, daß aus Cellulosederivaten, wie z.B. Celluloseether und -ester, Filme, Fasern und ander Formkörper, hergestellt werden können (Ullmann's Encyclopedie der technischen Chemie, Band 9, Seite 213-246, Verlag Chemie, Weinhein, 1976). Seit kurzem sind auch Mischungen aus Cellulosehydrat mit natürlichen und synthetischen Polymeren beschrieben worden (vgl. z.B. DE-A 4 002 083 und DE-A 4 009 758).

Aus diesen Produkten können Artikel mit hohem Gebrauchswert hergestellt werden. So sind insbesondere die aus regenerierter Cellulose hergestellten Garne, die Viskosegarne, sowie die Cellulosehydrat-Folien (Zellglas, Cellophan) weit verbreitet. Ihre Gebrauchseigenschaften erreichen insbesondere die Cellulosehydratfolien erst durch den Zusatz von primären und sekundären Weichmachern, zu den letzteren zählen Glykole, Harnstoffe, Glyzerin, und insbesondere Wasser.

Diese Produkte sind unbeschichtet jedoch nicht wasserdicht, und damit nicht alterungsbeständig gegenüber unterschiedlicher Klimalagerung.

Eine geringe Verbesserung der Wasserdichtigkeit von Cellulosehydratfolien wird über eine Lackierung erreicht. Hierzu werden im allgemeinen Nitrolacke oder PVDC-Lacke aber auch Kunststoff- und Metallverbunde verwendet (Ullmann's Encyclopedie der technischen Chemie, Band 11, S. 679, Verlag Chemie, Weinheim, 1976 DE-A 1 720 128, DE-A 1 261 033, DE-A 1 619 221, DE-A 1 720 127, DE-A 1 519 433, GB 1 050 253, DE-A 1 221 116). Aus ökologischen Gründen wird nach einem Ersatz der PVDC-Lackierung gesucht. Auch wird die biologische Abbaubarkeit der Folie durch die beschriebenen Beschichtungen und Verbunde, insbesondere durch die PVDC-Beschichtungen ausgeschlossen.

PVDC- und Nitrolacke haben den Nachteil schlechter Haftung auf der sehr hydrophilen Celluloseoberfläche, so daß Haftvermittler eingesetzt werden müssen.

Bei den Nitrolacken wird die Wasserdichtigkeit lediglich durch einen hohen Paraffinanteil erreicht. Bei Beschädigung der dünnen Schichten, wie sie schon in den Verarbeitungsmaschinen aufgrund der geringen Abriebfestigkeit erfolgen kann, erfolgt ein schneller Wasserdurchbruch.

Diese Nachteile der lackierten Cellulosehydratfolien führen zu einer Begrenzung ihres Einsatzbereiches auf Gebiete, wo nur mit geringer Feuchtigkeits- bzw. Wasserbelastung zu rechnen ist und die mechanische Belastung gering ist.

Ziel der vorliegenden Erfindung ist es, unmodifizierte und modifizierte Polysaccharidprodukte wie z.B. aus Regeneratcellulose bzw. von wasserquellbaren Cellulosederivaten und Abmischungen dieser beiden Produktgruppen sowie von Abmischungen mit synthetischen Polymeren durch eine Oberflächenbehandlung soweit zu modifizeren, daß sie über einen wesentlich längeren Zeitraum als die nach dem Stand der Technik behandelten dabei aber biologisch abbaubar und unter Kompostierungsbedingungen mineralisierbar sind. Somit erschließen sich neue Einsatzbereiche, wie z.B. Hygieneartikel, Verpackungsmittel, Artikel für Medizin, Nahrungsmittelindustrie, Abfallentsorgung und Landwirtschaft.

Gegenstand der vorliegenden Erfindung sind solche ökologisch unbedenklichen biologisch abbaubare Beschichtungssysteme, die mit Polysaccharidsubstraten eine chemische und physikalische Wechselwirkung eingehen können, eine gute Haftung aufweisen und die Wasserdurchdringung stark reduzieren. Dies wurde überraschenderweise mit Polyurethan-Beschichtungssystemen erreicht, insbesondere mit solchen die einen wesentlich höheren Isocyanatanteil enthalten als konventionelle Polyurethanlacke (siehe Vergleichsbeispiele).

Die Substrate sind dadurch gekennzeichnet, daß sie aus unmodifizierten oder modifizierten Polysacchariden insbesondere an regenerierter Cellulose oder wasserquellbaren Cellulosederivaten oder aus Mischungen von Cellulose und/oder Celluosederivaten und synthetischen Polymeren bestehen.

Die Beschichtungssysteme sind dadurch gekennzeichnet, daß das Bindemittel aus mindestens einem oder mehreren Polyisocyanaten A, gegebenenfalls einer oder mehrerer Hydroxylverbindung B, gegebenenfalls eines oder mehrerer Celluloseester C besteht, und daß das NCO:OH-Verhältnis vorzugsweise größer als 1:0,85 ist, insbesondere zwischen 1:0,80 bis 1:0,15 liegt.

Geeignete Polyisocyanate sind beispielsweise aliphatische, cycloaliphatische, araliphatische, aromatische und heterocyclische Polyisocyanate.

Besonders geeignet sind Polyisocyanate oder Polyisocyanatgemische mit ausschließlich aliphatisch und/oder cycloaliphatisch gebundenen Isocyanatgruppen mit einer Funktionalität > 2,0. Insbesondere geeignet sind sogenannte Lackisocyanate, beispielsweise auf Basis von Hexamethylendiisocyanat oder von 1-Isocyanato-3,5-trimethyl-5-isocyanatomethyl-cyclohexan (IPDI) und/oder Bis-(isocyanatocyclohexyl)-methan. Unter Lackpolyisocyanaten auf Basis dieser Diisocyanate sind die an sich bekannten Biuret-, Urethan-, Urethdion und/oder isocyanuratgruppenaufweisenden Derivate dieser Diisocyanate zu verstehen (US 3 124 605, US 3 358 010, US 3 903 126, DE 1 022 789, DE 1 222 067). Ebenfalls verwendet werden können Polyisocyanate mit Carbodiimidgruppen (DE 1 092 007), Polyisocyanate mit Alophanatgruppen (GB 944 890) sowie urethangruppenaufweisende Polyisocyanate (US 3 394 164) und prepolymere bzw. polymere Substanzen mit mindestens zwei Isocyanatgruppen.

Erfindungsgemäß ebenfalls geeignet, jedoch weniger bevorzugt sind aromatische Polyisocyanate auf Basis von 2,4-Diisocyanatotoluol oder dessen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackisocyanate sind beispielsweise die urethangruppenaufweisenden Isocyanate, wie sie durch Umsetzung von 2,4-Diisocyanatotoluol mit mehrwertigen Alkoholen, wie Trimethylolpropan, erhalten werden. Weitere aromatische Lackpolyisocyanate sind beispielsweise Diisocyanato-Isocyanurate.

Die Polyisocyanatkomponente kann im übrigen aus beliebigen Gemischen der beispielhaft genannten Polyisocyanate bestehen.

Als Hydroxylkomponente B können die zur Herstellung von Beschichtungsmitteln auf Polyurethanbasis an sich bekannten Polyole und Mischungen von Polyolen eingesetzt werden. Besonders bevorzugt sind Polyesterpolyole, Polyetherpolyole, Polytrietherpolyole, OH-gruppenhaltige Acrylate Hydroxyacetate, Hydroxypolycarbonate, Polysaccharidderivate, Hydroxylpolyesteramide und natürliche Öle und Derivate von natürlichen Ölen. Auch niedermolekulare Polyole, wie z.B. Ethandiol und Hexandiolamide, können mitverwendet werden.

Besonders bevorzugt sind Polyesterpolyole, insbesondere verzweigte Polyesterpolyole, die durch Kondensation von Polycarbonsäuren, vorzugsweise Dicarbonsäuren, wie Isophthalsäure, Phthalsäure, Adipinsäure, Terephthalsäure, Tetrahydrophthalsäure, Bernsteinsäure, Hexahydrophthalsäure, Maleinsäure, Fumarsäure, Fettsäuren, Sebacinsäure, Trimellithsäure bzw. deren Anhydride mit Diolen und Polyolen, wie Ethylenglykol, 1,2-Propandiol, 1,3-Propandiol, 1,4-Butandiol, 1,4-Dimethylolcyclohexan, 1,6-Hexandiol, Diethylenglykol, Triethylenglykol, Tetraethylenglykol, 1,2,6-Hexantriol, Glycerin, Trimethylolpropan, Trimethylolethan, Pentaerythrit, Mannit, Sorbit sowie deren Ethoxylierungs- und Propoxylierungsprodukte hergestellt werden. Auch Polyester aus Lactonen sind einsetzbar.

Weiterhin besonders bevorzugt sind natürliche Öle, wie z.B. Rizinusöl, und Derivate von natürlichen Ölen, wie z.B. Ethoxylierungsprodukte aus natürlichen Trifettsäureglyzerinen.

Vertreter der erfindungsgemäß zu verwendenden Polyisocyanat- und Hydroxylverbindungen sind z.B. im Polyurethan-Handbook, Carl Hanser Verlag, München, 1985, aufgeführt.

Als Celluloseester eignen sich besonders Celluloseacetobutyrat, Celluloseacetat, Cellulosenitrat sowie Mischester, besonders bevorzugt Cellulosenitrat aller Viskositätsstufen miteinem Stickstoffgehalt von 10,0-12,6 Gew.-%.

In einer bevorzugten Ausführungsform werden die Komponenten A bis C in folgenden Mengenverhältnissen eingesetzt:

| Polyisocyanate A | 25 - 98 Gew.-T., |
|---|---|
| insbesondere | 30 - 95 Gew.-T., |
| Hydroxylverbindungen B | 2 - 60 Gew.-T., |
| insbesondere | 5 - 50 Gew.-T., |
| Celluloseester C | 0 - 50 Gew.-T., |
| insbesondere | 3 - 30 Gew.-T., |

Die Beschichtungskomponenten werden üblicherweise in Lösungsmitteln appliziert. Verwendet werden können polyurethantyptische Lösemittel, wie Dimethylformamid, Ketoester, Kohlenwasserstoffe, Glycol-Ether-Ester, Ether, Ester, Pyrrolidone und Ketone, wie z.B. Toluol, Xylol, Ethylacetat, Butylacetat, Cyclohexanon, Methylethylketon, Aceton, Isophoron oder Mischungen davon.

Die erfindungsgemäße Basisbeschichtungszusammensetzung kann noch weitere übliche Zusätze, wie Füllstoffe, Stabilisatoren, Gleitmittel, Antiblockmittel, Mattierungsmittel, Haftverbesserer, Netzmittel, Dispergierhilfsmittel, Verlaufsmittel, Entschäumer, Pigmente bzw. Farbstoffe und Katalysatoren einzeln oder im Gemisch in den üblichen Mengen enthalten.

Im Sinne der vorliegenden Erfindung können auch Paraffine mit gutem Erfolg eingesetzt werden.

Als Katalysatoren können insbesondere metallorganische Verbindungen, wie Organozinkverbindungen, in Mengen von 0,1 bis 1 %, berechnet auf Gesamtbindemittel, der Lackkomponente zugesetzt werden.

Dem erfindungsgemäßen Bindemittelsystem können lacksübliche Weichmacher, wie z.B. Ester von aliphatischen, aromatischen und cycloaliphatischen Carbonsäuren sowie anorganischen Säuren, zugesetzt werden. Ebenfalls verwendet werden können Weichmacher auf der Basis natürlicher Öle, wie z.B. epoxidiertes Sojabohnenöl.

Außerdem können weiter Harze, wie z.B. Alkyd-, Maleinsäure-, Phenol-, Formaldehyd-, Xylol-, Keton-, Sulfonamid-, Amin-, Epoxy-, Carbamidsäure-, Phenyl- und Acrylatharz zugesetzt werden.

Geeignete Applikatonsformen sind Spritzen, Walzen, Rakeln, Gießen, Streichen, Tauchen und Drucken.

Die mit dem erfindungsgemäßen Beschichtungsmittel versehenen Polysaccharidprodukte eignen sich z.B. als biologisch abbaubare Verpackungsmaterialien, insbesondere von Flach- und Schlauchfolien, ferner als Müllbeutel, Einkaufstüten, Mulch- und Silofolien, Hygieneartikel, Außenhüllen für Windeln, Transparentpapier, Kopierfolien und dekorative Materialien.

Der Gegenstand der Erfindung soll anhand der folgenden Beispiele noch näher erläutert werden.

Beispiele

Beispiele 1-3

Es wurde eine Beschichtung auf Basis der in der folgenden Tabelle aufgeführten Komponenten hergestellt und mit einem Rakel beidseitig in einer Stärke von 15 $\mu$m auf das Substrat aufgetragen. Als Substrat diente eine Folie aus einer Mischung Cellulosehydrat und einem Polyetherurethan nach DE-A 4 009 758.

Tabelle 1

| | | 1 | 2 | 3 | Vergleichs-beispiel 1 | Vergleichs-beispiel 2 | Vergleichs-beispiel 3 |
|---|---|---|---|---|---|---|---|
| Nitrocellulose, Norm AM 17[*] | (Gew.-T.) | 4 | 4 | - | - | 4 | 4 |
| epoxidiertes Sojabohnenöl | (Gew.-T.) | 1 | 1 | - | - | 1 | 1 |
| stark verzweigter Polyester[1]) 8,8 Gew.-% OH | (Gew.-T.) | 7,5 | 2,5 | - | - | 9,2 | 5 |
| schwach verzweiger Poly-ester[2)], 5,1 Gew.-% OH | (Gew.-T.) | 2,5 | 2,5 | - | - | 5 | 5 |
| Rizinusöl, 5 % OH | (Gew.-T.) | - | - | 5 | - | - | - |
| Isocyanatharz[3)], 17 Gew.-% NCO, Basis HMDI | (Gew.-T.) | 15 | 15 | - | - | 7,5 | 7,5 |
| Isocyanarharz, 4 % NCO[4)], Basis IPDI | (Gew.-T.) | - | - | 20 | - | - | - |
| Butylacetat | (Gew.-T.) | 80 | 60 | 30,5 | - | 54,8 | 50 |
| Xylol | (Gew.-T.) | 40 | 40 | 40 | - | 40 | 40 |
| Paraffin, Fp: 48-50°C | (Gew.-T.) | - | - | 0,5 | - | - | - |
| Festkörpergehalt | (Gew.-T.) | 20 | 20 | 24,5 | - | 20 | 20 |
| NCO:OH | | 1:0,76 | 1:0,34 | 1:0,75 | - | 1:1,55 | 1:1 |
| Wasserfestigkeit | (h) | 24 | 36 | 16 | 0,1 | 3 | 5 |

EP 0 518 154 A2

*DIN 53 179

[1]Desmophen 800, der Bayer AG, Leverkusen

[2]Desmophen 1155, der Bayer AG, Leverkusen

[3]Desmodur N, der Bayer AG, Leverkusen

[4]Desmodur E41 der Bayer AG, Leverkusen

Prüfung der Wasserfestigkeit

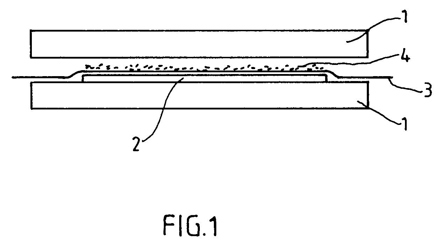

Nach 7 Tagen Trocknungszeit bei 20°C wurden diese Folien über eine Metallkante gezogen, um die Belastung im Verarbeitungsprozeß zu simulieren. Anschließend wurde die Wasserfestigkeit mit folgendem Versuchsaufbau (gemäß Fig. 1) ermittelt:

In Figur 1 bedeuten:
1. Glasscheibe 10 x 10 cm
2. Vlies, wasserfeucht
3. beschichtetes Substrat
4. Methylen-Blau-Pulver

Es wurde der Zeitpunkt ermittelt, an dem das Methylen-Blau-Pulver durch hindurchdrückendes Wasser angelöst wurde. Der Zeitpunkt der Anlösung ist durch eine intensive Blaufärbung zu erkennen. Eine Wasserfestigkeit von 12 h wird als Mindestanforderung für den Einsatz mit feuchten Medien angesehen werden.

In den angegebenen Beispielen wurde eine Wasserfestigkeit zwischen 16-36 h erzielt.

Die beschichteten Folien waren biologisch abbaubar. Sie konnten im Kompostierverfahren mineralisiert werden.

Vergleichsbeispiel 1:

Ebenso wie in den Beispielen wurde eine allerdings unbeschichtete Folie dem Wasserfestigkeitsrest unterzogen. Sie erreichte lediglich einen Wasserfestigkeitswert von 0,1 h.

Vergleichsbeispiel 2-3:

Hierbei wurde die Folie mit einem Beschichtungsmittel mit einem NCO:OH-Verhältnis Kleiner 1:0,85 eingesetzt. Die Anforderung an die Wasserfestigkeit zum Einsatz mit feuchten Medien konnte nicht erreicht werden.

**Patentansprüche**

1. Beschichtungsmittel für Filme, Formkörper und Folien aus modifizierten oder unmodifizierten Polysacchariden, insbesondere aus regenerierter Cellulose oder wasserquellbaren Cellulosederivaten oder aus Mischungen von regenerierter Cellulose und/oder Cellulosederivaten und synthetischen Polymeren, bestehend im wesentlichen aus Polyisocyanaten.

2. Beschichtungsmittel gemäß Anspruch 1, dadurch gekennzeichnet, daß es zusätzlich eine Hydroxylverbindung enthalten kann und wobei das NCO:OH-Verhältnis größer als 1:0,8 ist.

3. Beschichtungsmittel gemäß einem der Ansprüche 1 oder 2, dadurch gekennzeichnet, daß als Hydroxylverbindung ein Polyesterpolyol eingesetzt wird.

4. Beschichtungsmittel nach einem der Ansprüche 1-3, dadurch gekennzeichnet, daß das NCO:OH-Verhältnis der eingesetzten Komponenten zwischen 1:0,80 und 1:0,15 liegt.

5. Beschichtungsmittel nach einem der Ansprüche 1-4, dadurch gekennzeichnet, daß es zusätzlich einen Celluloseester enthalten kann.

6. Beschichtungsmittel nach einem der Ansprüche 1-5, dadurch gekennzeichnet, daß es 25-98 Gew.-Teile eines Polyisocyanates, 2-60 Gew.-Teile einer Hydroxyverbindung und 0-50 Gew.-% Teile eines Celluloseesters enthält.

7.  Beschichtungsmittel gemäß einem der Ansprüche 1 bis 6, dadurch gekennzeichnet, daß das NCO-OH-Verhältnis größer als 1:0,8 ist.

8.  Beschichtungssysteme für Filme, Formkörper und Folien aus modifizierten und unmodifizierten Polysacchariden, insbesondere aus regenerierter Cellulose oder wasserquellbaren Cellulosederivaten und synthetischen Polymeren, enthaltend
    a) 3 bis 50 Gew.-% Celluloseester
    b) 25 bis 98 Gew.-% Polyisocyanat
    c) 2 bis 60 Gew.-% Polyester-polyol
    d) 0 bis 5 Gew.-% Paraffine
    e) gegebenenfalls weitere Hilfs- und Zusatzmittel.

9.  Beschichtungssysteme für Filme und andere Formkörper gemäß Anspruch 1 aus Blends aus Regeneratcellulose und synthetischen oder natürlichen Polymeren, enthaltend
    a) 5 bis 25 Gew.-% Celluloseester
    b) 30 bis 95 Gew.-% Polyisocyanat
    c) 5 bis 50 Gew.-% Polyester-polyol
    d) 0,2 bis 3 Gew.-% Paraffine
    e) gegebenenfalls weitere Hilfs- und Zusatzmittel.

10. Verwendung von Beschichtungsmitteln gemäß einem der Ansprüche 1 bis 8 zur Beschichtung von Filmen, Formkörpern oder Folien.

11. Filme, Formkörper oder Folien beschichtet mit einem Beschichtungsmittel gemäß einem der Ansprü-che 1 bis 8.

FIG.1